# EUROPEAN PATENT APPLICATION

(11) **EP 3 657 305 A1**
(43) Date of publication of application: **27.05.2020**
(21) Application number: 18306567.1
(22) Date of filing: 23.11.2018
(51) Int. Cl.: G06F 3/0354, G06F 3/03, G06K 9/22, G06F 3/0346

(54) **WRITING INSTRUMENT FOR DIGITIZING INDICIA**

(71) Applicant: Société BIC, 92110 Clichy (FR)
(72) Inventor: FOLGOAS, Loïc, 75017 PARIS (FR)
(74) Representative: Cabinet Beau de Loménie

(57) **Abstract**

A writing instrument (10) comprising a writing tip (30) configured to deposit indicia (60) on a writing surface (50), an indicia recording mechanism (40); and an indicator (70) configured to indicate that the writing instrument be positioned into the predetermined orientation, wherein the writing instrument is configured to record indicia on a writing surface when the writing instrument is positioned in the predetermined orientation.

## Description

### TECHNICAL FIELD

The present disclosure relates to a writing instrument configured to capture an image of indicia on a writing surface and save the image or process the image into text, a method for digitizing an image of indicia, and a system comprising the writing instrument and external, second storage device.

### BACKGROUND

Writing instruments that are capable of digitizing hand gestures are presently in the market. For example, a system that allows a user to mimic writing on a writing surface, usually an electronic pad, and digitizes the sensed movements into text. The mimicked writing is digitalized based on the location of the pen relative to the electronic pad.

These writing instruments do not use ink and therefore prevents a user to clearly see what they are writing in real time. This problem is exacerbated if there is a lag between the movements and the subsequent digitization. Another problem with this system is that it requires a specific surface (for example, the electronic pad or special paper with markers) to operate. Replacing these special items can be expensive.

Accordingly, there is a need to provide a writing instrument that is capable of depositing indicia on a writing surface and digitizing the deposited indicia.

### SUMMARY

An embodiment relates to a writing instrument configured to capture and digitize an image of indicia on a writing surface.

A writing instrument comprising a writing tip configured to deposit indicia on a writing surface, an indicia recording mechanism; and an indicator configured to indicate that the writing instrument be positioned into the predetermined orientation, wherein the writing instrument is configured to record indicia on a writing surface when the writing instrument is positioned in the predetermined orientation.

The benefit of providing such a writing instrument that is capable of depositing indicia, for example, ink or graphite, a user can clearly see what they are writing in real time while the deposited indicia can be digitized into typed text. Additionally, this instrument removes the requirement of having a special electrical pad or designed paper.

In some embodiments, the indicia recording mechanism may be a camera.

A camera is quick and thus efficient in capturing a large amount of information for later processing.

In some embodiments, the writing instrument may comprise at least one sensor configured to detect the predetermined position.

Sensors improve power and information efficiency by allowing the writing instrument to capture images at a distinct moment rather than continuously recording information with the indicia recording mechanism. Additionally, sensors and can require a low amount of power to operate.

In some embodiments, the predetermined orientation may be a distance within a range of 200 mm from the writing surface.

Using the distance from the page as a triggering event helps ensure continuity of the images to facilitate later processing.

In some embodiments, the indicator may be configured to indicate that the writing instrument be positioned into the predetermined orientation based on a predetermined event.

Using an indicator to alert the user when the take another image is an easy alert mechanism, additionally, this system also ensures continuity of the images to facilitate later processing.

In some embodiments, the predetermined event may be a time lag of 20 ms.

The time lag is another manner which ensures continuity of the images to facilitate later processing and mitigates storage issues.

In some embodiments, the predetermined event may be a detected displacement 50 mm along the writing surface.

Using displacement as a triggering event is another manner which ensures continuity of the images to facilitate later processing and mitigates storage issues.

In some embodiments, the writing instrument may comprise a storage device configured to store captured information from the indicia recording mechanism.

Incorporating a storage device with the writing instrument facilitates portability. It also permits a user to use the writing instrument when they are not connected to an external storage device, such as a computer or smartphone.

In some embodiments, the writing instrument may comprise a transmitter for transmitting information stored on the storage device to a second storage device.

Including a transmitter allows a user to not have to be encumbered by a cord or other physical connection device.

In some embodiments, the writing instrument may comprise a control device configured to actuate the indicia recoding mechanism when the orientation of the writing instrument is in the predetermined orientation, where the at least one sensor is configured to communicate an orientation of the writing instrument to the control device.

Incorporating a control device improves the efficiency and workflow of the writing instrument.

An embodiment also relates to a system for digitizing indicia deposited on a writing surface comprising the aforementioned writing instrument and a second storage device.

Providing a second storage device increases the storage available for the information captured by the indicia recording device and for possible processing of the captured information.

In some embodiments, the second storage device may be a computer.

Using a computer as a second storage device gives a user an option to process the captured information on the computer.

An embodiment also relates to a method of digitizing indicia deposited on a writing surface, the method comprises providing the aforementioned system for digitizing indicia; depositing indicia on a writing surface; indicating that the writing instrument should be positioned into the predetermined orientation; positioning the writing instrument in the predetermined orientation; and capturing an image of the deposited indicia.

This method permits a user to see what writing is being digitized in real time and digitizes the writing in an efficient manner.

In some embodiments, the writing instrument further comprises a processing unit, wherein the method comprises processing the captured image of the deposited indicia into text.

Including a built in processing unit give a user the ability to avoid needing a special processing computer or processing application on a computer to process the captured information into text.

### BRIEF DESCRIPTION OF THE DRAWINGS

The invention and its advantages can be better understood by reading the detailed description of various embodiments of the invention given as non-limiting examples. The description refers to the accompanying sheets of figures, in which:
FIG. 1 shows a writing instrument;
FIG. 2A shows a perspective view showing a writing instrument and indicia on a writing surface; and
FIG. 2B shows a perspective view showing a writing instrument in a predetermined position capturing and storing an image of the indicia on the writing surface.

### DETAILLED DESCRIPTION

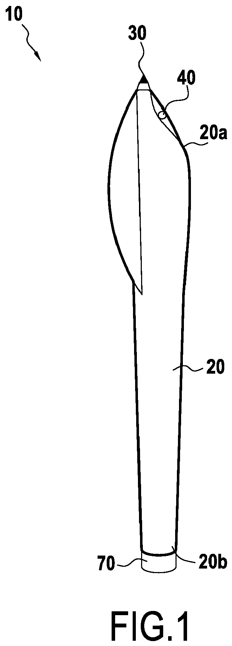

FIG. 1 shows a writing instrument 10 having a body portion 20 including a first end 20a and a second end 20b. The body portion 20 may have an elongated shape. The writing instrument 10 may be shaped to adapt to the contours of a human hand.

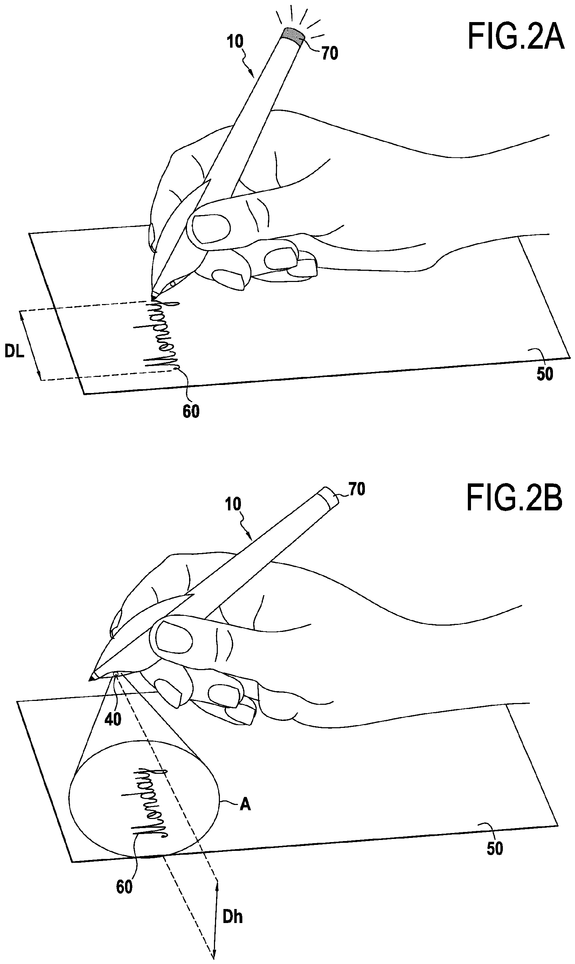

The writing instrument 10 may include a writing tip 30 that is configured to extend from the first end 20a of the body portion 20. As shown in FIGS. 2A and 2B, the writing tip 30 may be configured to dispose indicia 60 on a writing surface 50 (for example, a sheet of paper). Indicia 60 may be, for example, ink, marker, graphite, gel, etc. The writing instrument 10 may have a refillable or replaceable writing tip 30.

The writing instrument 10 may include an indicia recording mechanism 40. This indicia recording mechanism 40 may be, for example, a camera. The indicia recording mechanism 40 may be disposed at the first end 20a of the body portion 20. The indicia recording mechanism 40 may have an image capture area A when at a distance Dh from, and perpendicular to, the writing surface 50.

The writing instrument 10 may include a storage device. The storage device may be disposed within the body portion 20. The storage device may be configured to store information, for example, images captured by the indicia recording mechanism 40.

The writing instrument may include a transmitter. The transmitter may be disposed within the body portion 20. The transmitter may be configured to transmit information stored on the storage device to an external second storage device. This may be achieved by using, for example, Bluetooth®. The external second storage device should be interpreted as any device capable of storing the information, including but not limited to, a computer, smartphone, cloud based system, or external hard drive. However, it is also contemplated that the writing instrument may include an export port disposed on the body portion 20 for tethering the writing instrument 10 to the external storage device for exporting the stored information on the internal storage device to the external storage device.

The writing instrument 10 may include at least one sensor. The sensor may be disposed within the body portion 20. The sensor may be configured to communicate an orientation of the writing instrument to the control device. Any appropriate position sensor may be used, for example, an angular position of tilt sensor. However, the sensor may be a distance sensor to detect the distance between the writing instrument 10 and the writing surface 50. It is also envisioned that the writing instrument 10 may have any number and combination of sensors.

The writing instrument 10 may include an indicator 70 configured to indicate that the writing instrument be positioned into a predetermined orientation based on a predetermined event. In particular, the predetermined orientation may be an orientation that allows the indicia recording mechanism 40 to adequately capture the deposited indicia 60 on the writing surface 50. This position may be substantially perpendicular to an initial sensed orientation of the writing instrument. This position may be perpendicular to the writing surface 50. It is also envisioned that a predetermined orientation may be when the writing instrument 10 is a distance Dh away from the writing surface 50.

A predetermined event may be based on a time lapse between when a user begins writing and/or between image captures. It is also envisioned that a predetermined event may be a sensed displacement DL of the writing instrument 10 along the writing surface 50. This sensed displacement DL may correspond with the image capture area A.

The writing instrument 10 may include a control device. The control device may be disposed within the body portion 20. The control device may be configured to control actuation of the indicia recording mechanism 40, storing information on the storage device, transmitting or exporting the stored information from the internal storage device to an external storage device, and triggering the indicator 70.

The writing instrument 10 may include a processor. The processor may be configured to process the captured images of the deposited indicia 60 and convert said images into text. This converted text may be stored on the internal storage device. However, it is also envisioned that the writing instrument 10 may not process the image files, but export the image files to an external storage device that is configured to process the files. For example, an image-to-text application on a smartphone, tablet, computer, etc.

The writing instrument 10 further includes a power source. For example, replaceable or rechargeable batteries.

In operation, a user turns on the writing instrument 10. This may be done, for example, by pressing a button, starting to write, or applying pressure to the writing tip 30. After a predetermined event occurs, for example a time lapse or sensed displacement, the indicator 70 is triggered to alert the user to position the writing instrument 10 into the predetermined position. Once it is detected that the writing instrument 10 is in the predetermined position, the indicia recording mechanism 40 is activated. For example, a picture of the deposited indicia 60 is captured. The information captured by the indicia recording mechanism 40 is then stored on the internal storage device. This process may be repeated until the user is finished writing or the internal storage device is full. The information stored on the internal storage device may be transferred while the user is in the process or writing or when the user is finished writing. For example, if the user is not able to connect with an external storage device, the information is stored in the writing instrument 10 until the user is able to connect with the external storage device to export the information. However, if the user is connected to the external storage device, the writing instrument 10 may export the information while the user is using the writing instrument 10.

Although the present invention is described with reference to specific examples, it is clear that modifications and changes may be made to these examples without going beyond the general scope of the invention as defined by the claims. In particular, individual characteristics of the various embodiments shown and/or mentioned may be combined in additional embodiments. Consequently, the description and the drawings should be considered in a sense that is illustrative rather than restrictive.

Additionally, all of the disclosed features of an apparatus may be transposed, alone or in combination, to a method and vice versa.

## Claims

1. A writing instrument (10) comprising:
a writing tip (30) configured to deposit indicia (60) on a writing surface (50),
an indicia recording mechanism (40) ; and
an indicator (70) configured to indicate that the writing instrument be positioned into the predetermined orientation, wherein
the writing instrument is configured to record indicia on a writing surface when the writing instrument is positioned in the predetermined orientation.

2. The writing instrument (10) of claim 1, wherein the indicia recording mechanism (40) is a camera.

3. The writing instrument (10) of claim 1 or 2, comprising at least one sensor configured to detect the predetermined position.

4. The writing instrument (10) according to any one of the previous claims, wherein the predetermined orientation is a distance within a range of 200 mm from the writing surface.

5. The writing instrument (10) of any one of the preceding claims, wherein the indicator (70) is configured to indicate that the writing instrument (10) be positioned into the predetermined orientation based on a predetermined event.

6. The writing instrument (10) of claim 5, wherein the predetermined event is a time lag of 20 ms.

7. The writing instrument (10) of claim 5, wherein the predetermined event is a detected displacement 50 mm along the writing surface (50).

8. The writing instrument (10) of any one of the previous claims comprising a storage device configured to store captured information from the indicia recording mechanism (40).

9. The writing instrument (10) according to claim 8 comprising a transmitter for transmitting information stored on the storage device to a second storage device.

10. The writing instrument (10) of any one of claims 3-9 comprising a control device configured to actuate the indicia recoding mechanism (40) when the orientation of the writing instrument (10) is in the predetermined orientation, wherein the at least one sensor is configured to communicate an orientation of the writing instrument (10) to the control device.

11. A system for digitizing indicia deposited on a writing surface (50) comprising:
the writing instrument (10) according to any one of claims 1-10; and
a second storage device.

12. The system according to claim 9, wherein the second storage device is a computer.

13. A method of digitizing indicia deposited on a writing surface (50), the method comprising:
providing a system for digitizing indicia deposited on a writing surface according to claims 11-12;
depositing indicia (60) on a writing surface (50);
indicating that the writing instrument should be positioned into the predetermined orientation;
positioning the writing instrument (10) in the predetermined orientation; and
capturing an image of the deposited indicia.

14. The method according to claim 13, wherein the writing instrument (10) further comprises a processing unit, wherein the method comprises:
processing the captured image of the deposited indicia into text.
